# EUROPEAN PATENT APPLICATION

(11) **EP 4 656 860 A1**
(43) Date of publication of application: **03.12.2025**
(21) Application number: 25179979.7
(22) Date of filing: 30.05.2025
(51) Int. Cl.: F02C 3/30, F02C 7/143

(54) **AXIAL FLOW TAPERED CONDENSER ARRANGEMENT FOR AN AIRCRAFT PROPULSION SYSTEM**

(30) Priority: 30.05.2024 US 202418678518
(71) Applicant: RTX Corporation, Farmington, CT 06032 (US)
(72) Inventor: CHANDLER, Jesse M., Farmington, 06032 (US)
(74) Representative: Dehns

(57) **Abstract**

An aircraft propulsion system (20) includes an exhaust duct assembly (84; 128), and a plurality of condenser pairs (74) where water (50) is condensed from the exhaust gas flow (42) received through the exhaust duct assembly (84; 128). Each of the condenser pairs (74) comprise inner faces (96) for receiving a cooling airflow (48) that taper inward from an open forward portion (114) toward a closed aft portion (116) such that the cooling airflow (48) flows through the inner faces (96) toward outward faces (98).

## Description

### TECHNICAL FIELD

The present disclosure relates generally to a condenser arrangement for a water recovery system of an aircraft propulsion system.

### BACKGROUND

An aircraft propulsion system typically includes a gas turbine engine with a fan section, a compressor section, a combustor section, and a turbine section. Air entering the compressor section is compressed and delivered into the combustion section where it is mixed with fuel and ignited to generate a high-energy exhaust gas flow. Energy in the high energy exhaust flow is recovered as it is expanded through a turbine section. A large amount of energy in the form of heat is simply exhausted from the turbine section to the atmosphere. Steam injection can provide improved propulsive efficiencies by increasing mass flow without a corresponding increase in work. Water recovered from the exhaust gas flow may be transformed into steam using thermal energy from the exhaust gas flow. Water recovery is performed with condensing heat exchangers arranged relative to the engine that direct water to an evaporative heat exchanger.

Turbine engine manufacturers continue to seek further improvements to engine performance including improvements to thermal, transfer and propulsive efficiencies.

### SUMMARY

An aircraft propulsion system according to an aspect of the present invention, among other possible things includes, a core engine comprising a compressor, combustor, and turbine section. An inlet airflow is compressed communicated to the combustor, mixed with fuel, and ignited to generate an exhaust gas flow that is expanded through the turbine section, a propulsor driven about a propulsor axis by the core engine, an exhaust duct assembly, and a plurality of condenser pairs where water is condensed from the exhaust gas flow received through the exhaust duct assembly. Each of the condenser pairs comprise inner faces for receiving a cooling airflow that taper inward from an open forward portion toward a closed aft portion such that the cooling airflow flows through the inner faces toward outward faces.

In an embodiment of the above, the system includes a plurality of water separators where water from corresponding ones of the plurality of condenser pairs is separated from the exhaust gas flow.

In an embodiment according to any of the previous embodiments, the system includes an evaporator system where water extracted from the exhaust gas flow is heated to generate a steam flow for injection into the core engine.

In an embodiment according to any of the previous embodiments, the exhaust duct assembly further comprises a plurality of strut portions that each extend radially outward from a center portion to a turning portion.

In an embodiment according to any of the previous embodiments, the evaporator system further comprises a plurality of evaporators disposed within the central portion of the exhaust duct assembly.

In an embodiment according to any of the previous embodiments, each of the plurality of strut portions of the exhaust duct assembly are in flow communication with at least two of the plurality of condenser pairs.

In an embodiment according to any of the previous embodiments, the system includes a cooling air duct assembly where a portion of inlet airflow is communicated to each of the plurality of condenser pairs.

In an embodiment according to any of the previous embodiments, the system includes a bypass air duct assembly where a portion of the inlet airflow is bypassed around the plurality of condenser pairs and the core engine.

In an embodiment according to any of the previous embodiments, the turbine section of the core engine is forward of the combustor and the compressor section and an inlet duct assembly communicates a portion of the inlet airflow to an inlet that is disposed aft of the compressor section.

In an embodiment according to any of the previous embodiments, the system includes a power turbine coupled to drive the propulsor, the power turbine disposed engine forward of the core engine.

In an embodiment according to any of the previous embodiments, the system includes a nacelle assembly disposed about the propulsor and the core engine. The plurality of condenser pairs is supported within the nacelle.

In an embodiment according to any of the previous embodiments, the system includes an intercooling system where a portion of water recovered from the exhaust gas flow is injected into the compressor for cooling a core flow.

A water recovery system for an aircraft propulsion system according to another aspect of the present invention includes, among other possible things, a plurality of condenser pairs where water is condensed from an exhaust gas flow. Each of the condenser pairs comprise inner faces for receiving a cooling airflow that taper inward from an open forward portion toward a closed aft portion such that the cooling airflow flows through the inner faces toward outward faces and a plurality of water separators where water from corresponding ones of the plurality of condenser pairs is separated from the exhaust gas flow.

In an embodiment of the above, the system includes an evaporator system where water from the plurality of water separators is transformed into a steam flow and communicated to a combustor.

In an embodiment according to any of the previous embodiments, the evaporator system comprises a plurality of evaporators corresponding to the plurality of condenser pairs.

In an embodiment according to any of the previous embodiments, each of the plurality of condenser pairs comprises an outer condenser disposed radially outward of an inner condenser and the inward faces face radially inward toward each other and the outward faces face radially outward relative to each other.

In an embodiment according to any of the previous embodiments, the system includes a nacelle where the plurality of condenser pairs and the plurality of water separators are supported. The nacelle comprises a cooling air duct assembly where a portion of inlet airflow is communicated to each of the series of condensers for providing a cooling flow through each of the series of condensers.

In an embodiment according to any of the previous embodiments, the nacelle comprises a bypass air duct assembly where a portion of an inlet airflow is bypassed around the plurality of condenser pairs and a core engine.

A method of operating an aircraft propulsion system according to aspect of the present invention, among other possible things includes, generating an exhaust gas flow with a core engine comprising a compressor, combustor, and turbine section. The system includes coupling a propulsor to a power turbine configured to be driven by expansion of the exhaust gas flow about a propulsor axis by the core engine. The system also includes condensing water in a plurality of condenser pairs wherein each of the condenser pairs comprise inner faces for receiving a cooling airflow that taper inward from an open forward portion toward a closed aft portion such that the cooling airflow flows through the inner faces toward outward faces and separating water from the exhaust gas flow in one of a plurality of water separators.

In an embodiment of the above, the method incudes generating a steam flow from water extracted from the exhaust gas flow in an evaporator system that exhausts an exhaust gas flow into a corresponding one of a plurality of exhaust ducts.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system and water recovery system.
Figure 2 is a simplified schematic view of the example aircraft propulsion system of Figure 1.
Figure 3 is a front schematic view of an example condenser pair.
Figure 4 is a side schematic view of the example condenser pair of Figure 3.
Figure 5 is a top schematic view of an example condenser.
Figure 6 is a schematic view of another example water recovery system.

### DETAILED DESCRIPTION

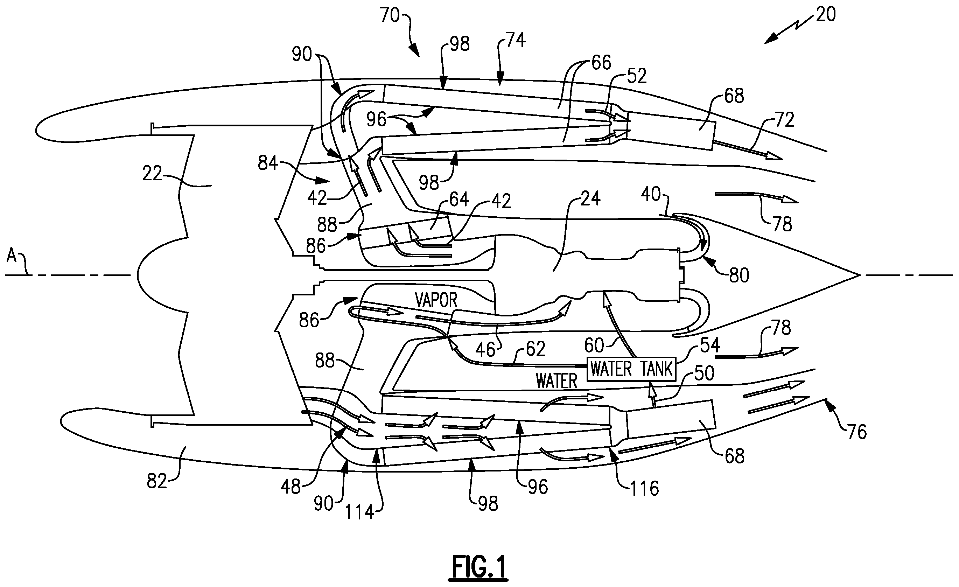

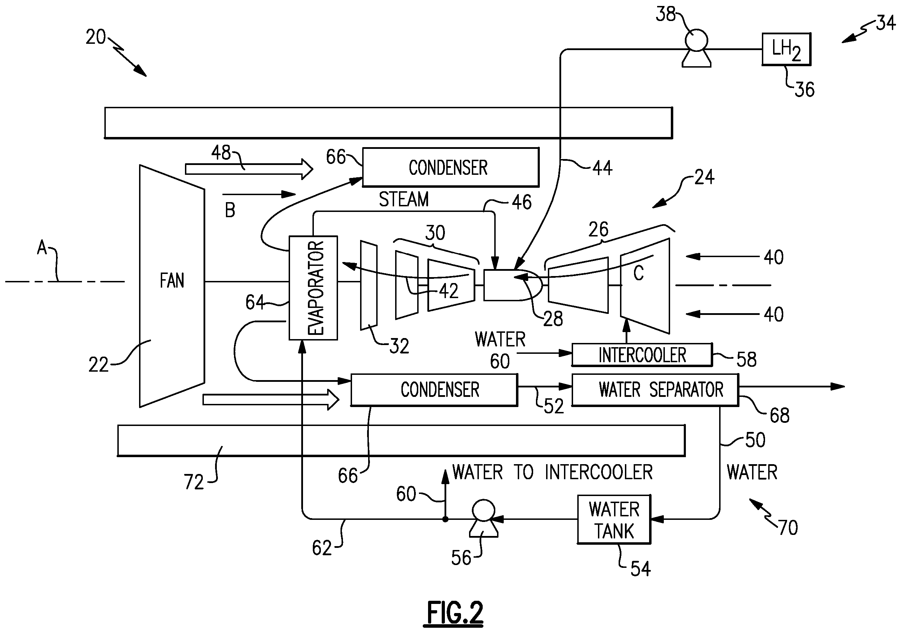

Figures 1 and 2 schematically illustrate an aircraft propulsion system 20 that includes a water recovery system 70 that generates a steam flow 46 with water recovered from an exhaust gas flow 42. The water recovery system 70 condenses water from the exhaust gas flow 42 in a series of condensers 66 that are arranged in pairs 74. Each of the condenser pairs 74 include inner faces 96 that taper from a spaced apart forward portion toward a closed aft portion. Cooling air 48 is introduced between the condensers 66 and forced through the inner faces 96 and out through the outward faces 98.

A mixture of water and exhaust gas flow is exhausted as mixed water and gas flow 52 from the condensers 66 and communicated through a separator 68 that directs water 50 to a water tank 54. Remaining gas flow 72 is exhausted through a nozzle 76 Water from the water tank 54 is provided to an evaporator 64 where heat from the exhaust gas flow 42 is used to generate the steam flow 46 that is injected into a core engine 24 to improve propulsive efficiency.

The evaporators 64 and condensers 66 are heat exchangers that are configured to transfer thermal energy. In the evaporators 64, thermal energy from the exhaust gas flow is utilized to vaporize water to generate the steam flow 46. In the condensers 66, a cooling airflow 48 is utilized to cool and condense liquid from the exhaust gas flow 42. Evaporation and condensing functions may require large areas of thermal communication. The disclosed condenser pairs 74 and evaporators 64 are arranged to provide the large areas for thermal communication in the limited space available within the example propulsion system 20.

The example propulsion system 20 includes a propulsive fan 22 and a reverse core engine 24. The example core engine 24 includes a compressor section 26, a combustor section 28 and the turbine section 30 disposed along the longitudinal axis A. In other examples, at least a portion of the core engine 24 may be offset from the axis A. In the illustrative example, the turbine section 30 is disposed engine forward of the combustor 28 and the compressor section 26. A power turbine 32 is arranged forward of the turbine section 30 and is driven by the exhaust gas flow 42 from the turbine section 30. The power turbine 32 is coupled to and drives the fan 22 and is rotatable independent of structures in the core engine 24. The power turbine 32 is not mechanically coupled to the core engine 24.

The fan 22 drives the bypass airflow 78 along a bypass flow path B, while the compressor section 26 draws an inlet flow 40 through an inlet duct 80 and along a core flow path C. The inlet flow 40 is turned 180 degrees into the compressor section 26 by the inlet duct 80. The inlet flow 40 is compressed and communicated to the combustor section 28 where the compressed inlet flow 40 is mixed with a fuel flow 44 and ignited to generate the exhaust gas flow 42. The exhaust gas flow 42 expands through the turbine section 30 where energy is extracted and utilized to drive at least the compressor section 26. The exhaust gas flow 42 further expands through the power turbine 32 to drive the fan 22.

As illustrated in Figure 2, in addition to the fuel flow 44, a steam flow 46 is introduced into the combustor 28. The steam flow 46 may be injected at the combustor 28 or a location upstream of the combustor for communication into the combustor 28. Performance is improved with the injection of the steam flow because the steam flow 46 increases mass flow through the turbine section 30 without additional work required by the compressor section 26.

A fuel system 34 includes at least a fuel tank 36 and a fuel pump 38 to provide the fuel flow 44 to the combustor 28. The example fuel system 34 is configured to provide a hydrogen based fuel such as a liquid hydrogen (LH₂). Although hydrogen is disclosed by way of example, other non-carbon based fuels could be utilized and are within the contemplation of this disclosure. Moreover, the disclosed features may also be beneficial in an engine configured to operate with traditional carbon fuels and/or biofuels, such as sustainable aviation fuel.

The example propulsion system 20 may further include an intercooler 58 for injecting an intercooling water flow 60 into the compressor section 26 to reduce a temperature of the inlet airflow 40 and increase mass flow. Reduced temperatures and increased mass flow provided by injection of water increases compressor efficiency.

Although an example engine architecture is disclosed by way of example, other turbine engine architectures are within the contemplation and scope of this disclosure. For example, the core engine 24 is disclosed by way of example as disposed along the longitudinal axis A, however different orientations of the core engine 24 may be used and are within the contemplation of this disclosure. Moreover, although the disclosed nonlimiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

The water recovery system 70 includes the plurality of condenser pairs 74, water separators 68, and a water storage tank 54. The water storage tank 54 provides for the accumulation of a volume of water required for production of sufficient amounts of steam. Water recovered from the exhaust gas flow 42 is pressurized by a water pump 56 to provide a pressurized water flow 62 to the evaporators 64. The water flow 60 may also be separately supplied to an intercooler 58 for cooling the core flow through the compressor section 26.

The example condensers 66 are arranged within the nacelle 82 circumscribing the core engine 24. The nacelle 82 includes ducting to direct a bypass flow 78, a bypass cooling air flow 48 and the inlet flow 40 to respective parts of the condenser pairs 74 and the core engine 24. The flows are exhausted through the nozzle 76 that defines openings at an aft portion of the nacelle 82.

The exhaust flow 42 is directed radially outward by an exhaust duct assembly 84. The exhaust duct assembly 84 includes a plurality of strut portions 88 that extend radially outward from a center portion 86. A turning portion 90 is disposed at an outer radial end of each of the strut portions 88. The center portion 86 turns exhaust gas flow radially outward through each of the strut portions 88. The turning portions 90 turn the exhaust gas flow 42 axially aft into a corresponding one of the condenser pairs 74. The turning portion 90 defines the passageway for communicating exhaust gas flow to each condenser 66 in the condenser pairs 74.

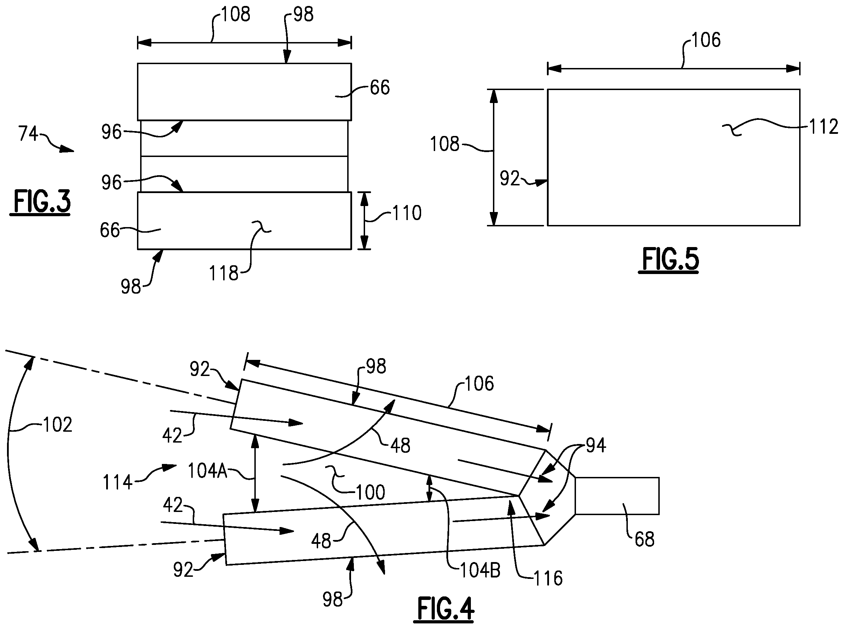

Referring to Figures 3, 4 and 5 with continued reference to Figure 1, each of the example condenser pairs 74 include condensers 66 of similar size and configuration. The condensers 66 includes inner faces 96 that are spaced apart a distance 104A at a forward portion 114. The spacing between inner faces 96 converges in an axial direction toward the closed aft portion 116. A spacing 104B between the inner faces 96 near the aft portion 116 is less than the spacing 104A near the forward portion 114.

The condensers 66 of each of the condenser pairs 74 are disposed at an angle 102 relative to each other to define an opening at the forward portion 114 and the closed aft end 116. A space 100 between the condensers 66 converges in an axial direction toward the aft end 116. The angle 102 may be any angle that is defined to provide a desired flow of cooling air into the space 100 and through the condensers 66.

The forward portion 114 is an opening between the condensers 66 and is configured to receive the cooling airflow 48. The cooling airflow 48 is forced by the tapered configuration of the space 100 between the condensers 66 through the inner faces 96 of each condenser 66 and out the outward faces 98. Accordingly, the axially directed cooling airflow 48 is turned radially through each condenser 66 of the condenser pairs 74 and then turned back axially to flow out the nozzle 76.

The exhaust gas flow 42 is communicated through forward faces 92 of each of the condensers 66. The exhaust gas flow 42 flows through the condensers 66 in a direction transverse to the cooling air flow 48. As the exhaust gas flow 42 is cooled, liquid forms and is exhausted through the aft face 94 as a mixed water and gas flow 52 (See Figure 1). The mixed flow 52 is communicated to a corresponding water separator 68 where water 50 is separated and communicated to the water tank 54.

In one example embodiment, each of the condensers 66 in the condenser pair 74 are substantially identical and include an axial length 106, a width 108, and a radial height 110. A flow area 112 for the cooling airflow 48 is defined by the axial length 106 and the width 108. A flow area 118 for the exhaust gas flow 42 is defined by the height 110 and the width 108. In one example embodiment, the width 108 is smaller the axial length 106. The flow area 118 of all of the condensers 66 of all of the condenser pairs 74 define the total flow area for the exhaust gas flow 42. The flow area 112 for each of the condensers 66 for each of the condenser pairs 74 define the total flow area for the cooling airflow 48. The total areas for the exhaust gas flow and the cooling airflow may be tailored to application specific water recovery requirements. The sizes of each of the condensers 66 are shown substantially the same, however, the condensers 66 may vary in size and flow area such that each condenser 66 is of different size and have different flow areas.

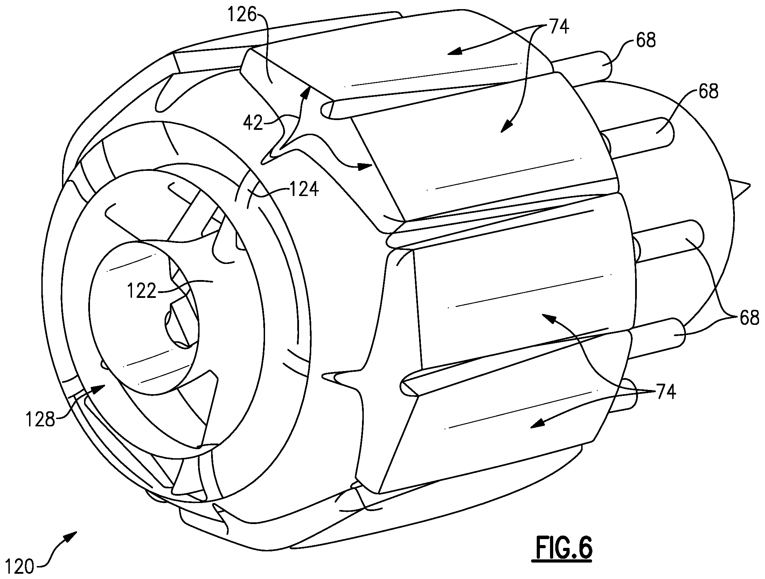

Referring to Figure 6, another example water recovery system 120 is shown and includes an exhaust duct assembly 128 with radial struts 124 that extend radially between an inner fixed structure or center portion 122 and an outer splitter portion 126. The example splitter portion 126 communicates exhaust gas flow 42 to two adjacent condenser pairs 74. Splitting exhaust gas flow between two condenser pairs 74 reduces the number of radial struts 124 that are required. The reduction in the number of radial struts 124 reduces obstructions that extend through a flow area around the core engine 24 and through the bypass flow path B.

Accordingly, the disclosed water recovery systems include condenser pairs 74 that converge such that cooling airflow flows radially through each condenser 66 and exhaust gas flow flows transverse to the cooling airflows through each condenser.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An aircraft propulsion system (20) comprising:
a core engine (24) comprising a compressor (26), combustor (28), and turbine section (30), wherein an inlet airflow (40) is compressed and communicated to the combustor (28), mixed with fuel, and ignited to generate an exhaust gas flow (42) that is expanded through the turbine section (30);
a propulsor (22) driven about a propulsor axis (A) by the core engine (24);
an exhaust duct assembly (84; 128); and
a plurality of condenser pairs (74) where water (50) is condensed from the exhaust gas flow (42) received through the exhaust duct assembly (84; 128), wherein each of the condenser pairs (74) comprise inner faces (96) for receiving a cooling airflow (48) that taper inward from an open forward portion (114) toward a closed aft portion (116) such that the cooling airflow (48) flows through the inner faces (96) toward outward faces (98).

2. The aircraft propulsion system (20) as recited in claim 1, further comprising a plurality of water separators (68) where water (50) from corresponding ones of the plurality of condenser pairs (74) is separated from the exhaust gas flow (42).

3. The aircraft propulsion system (20) as recited in claim 1 or 2, further comprising an evaporator system where water (50) extracted from the exhaust gas flow (42) is heated to generate a steam flow (46) for injection into the core engine (24).

4. The aircraft propulsion system (20) as recited in claim 3, wherein the evaporator system further comprises a plurality of evaporators (64) disposed within the central portion (86; 122) of the exhaust duct assembly (84; 128).

5. The aircraft propulsion system (20) as recited in any preceding claim, wherein the exhaust duct assembly (84; 128) further comprises a plurality of strut portions (88; 124) that each extend radially outward from a center portion (86; 122) to a turning portion (90), optionally wherein each of the plurality of strut portions (88; 124) of the exhaust duct assembly (84; 128) are in flow communication with at least two of the plurality of condenser pairs (74).

6. The aircraft propulsion system (20) as recited in any preceding claim, further comprising a cooling air duct assembly where a portion of the inlet airflow (40) is communicated to each of the plurality of condenser pairs (74).

7. The aircraft propulsion system (20) as recited in any preceding claim, further comprising a bypass air duct assembly where a portion of the inlet airflow (40) is bypassed around the plurality of condenser pairs (74) and the core engine (24).

8. The aircraft propulsion system (20) as recited in any preceding claim, wherein the turbine section (30) of the core engine (24) is engine forward of the combustor (28) and the compressor section (26) and an inlet duct assembly communicates a portion of the inlet airflow (40) to an inlet that is disposed aft of the compressor section (26).

9. The aircraft propulsion system (20) as recited in any preceding claim, further comprising:
a power turbine (32) coupled to drive the propulsor (22), the power turbine (32) disposed engine forward of the core engine (24); and/or
a nacelle assembly (82) disposed about the propulsor (22) and the core engine (24), wherein the plurality of condenser pairs (74) is supported within the nacelle (82).

10. The aircraft propulsion system (20) as recited in any preceding claim, further comprising an intercooling system where a portion of water (50) recovered from the exhaust gas flow (42) is injected into the compressor for cooling a core flow.

11. A water recovery system (70; 120) for an aircraft propulsion system (20) comprising:
a plurality of condenser pairs (74) where water (50) is condensed from an exhaust gas flow (42), wherein each of the condenser pairs (74) comprise inner faces (96) for receiving a cooling airflow (48) that taper inward from an open forward portion (114) toward a closed aft portion (116) such that the cooling airflow (48) flows through the inner faces (96) toward outward faces (98); and
a plurality of water separators (68) where water (50) from corresponding ones of the plurality of condenser pairs (74) is separated from the exhaust gas flow (42), optionally wherein each of the plurality of condenser pairs (74) comprises an outer condenser (66) disposed radially outward of an inner condenser (66) and the inward faces (96) face radially inward toward each other and the outward faces (98) face radially outward relative to each other.

12. The water recovery system (70; 120) as recited in claim 11, further comprising an evaporator system where water (50) from the plurality of water separators (68) is transformed into a steam flow (46) and communicated to a combustor (28), optionally wherein the evaporator system comprises a plurality of evaporators (64) corresponding to the plurality of condenser pairs (74).

13. The water recovery system (70; 120) as recited in claim 11 or 12, further comprising a nacelle (82) where the plurality of condenser pairs (74) and the plurality of water separators (68) are supported and wherein the nacelle (82) comprises a cooling air duct assembly where a portion of inlet airflow (40) is communicated to each of the series of condensers (66) for providing a cooling flow through each of the series of condensers (66), optionally wherein the nacelle (82) comprises a bypass air duct assembly where a portion of an inlet airflow (40) is bypassed around the plurality of condenser pairs (74) and a core engine (24).

14. A method of operating an aircraft propulsion system (20) comprising:
generating an exhaust gas flow (42) with a core engine (24) comprising a compressor (26), combustor (28), and turbine section (30);
coupling a propulsor (22) to a power turbine (32) configured to be driven by expansion of the exhaust gas flow (42) about a propulsor axis (A) by the core engine (24);
condensing water (50) in a plurality of condenser pairs (74) wherein each of the condenser pairs (74) comprise inner faces (96) for receiving a cooling airflow (48) that taper inward from an open forward portion (114) toward a closed aft portion (116) such that the cooling airflow (48) flows through the inner faces (96) toward outward faces (98); and
separating water (50) from the exhaust gas flow (42) in one of a plurality of water separators (68).

15. The method as recited in claim 14, further comprising generating a steam flow (46) from water (50) extracted from the exhaust gas flow (42) in an evaporator system that exhausts an exhaust gas flow (42) into a corresponding one of a plurality of exhaust ducts (84; 128).
